**Europäisches Patentamt**

**European Patent Office**

**Office européen des brevets**

(19)

(11) Veröffentlichungsnummer : **0 031 417**
**B1**

(12)     EUROPÄISCHE PATENTSCHRIFT

(45) Veröffentlichungstag der Patentschrift :
**05.10.83**

(51) Int. Cl.³ : **B 01 F   7/00**

(21) Anmeldenummer : **80106626.7**

(22) Anmeldetag : **29.10.80**

(54) **Freitragender Rührer zum Durchmischen eines Schüttgutbettes.**

(30) Priorität : **12.11.79 DE 2945678**

(43) Veröffentlichungstag der Anmeldung :
**08.07.81 Patentblatt 81/27**

(45) Bekanntmachung des Hinweises auf die Patenterteilung : **05.10.83 Patentblatt 83/40**

(84) Benannte Vertragsstaaten :
**DE GB NL**

(56) Entgegenhaltungen :
**DE A 1 757 921**
**DE A 2 424 928**
**DE A 2 535 984**
**DE B 1 153 515**
**DE B 1 809 018**
**DE C 672 850**
**US A 3 583 682**
**US A 4 146 334**

(73) Patentinhaber : **BASF Aktiengesellschaft**
**Carl-Bosch-Strasse 38**
**D-6700 Ludwigshafen (DE)**

(72) Erfinder : **Lenart, Wolfgang**
**An der Froschlache 23/143**
**D-6700 Ludwigshafen (DE)**
Erfinder : **Wolfgang, Rau, Dr.**
**Turnerstrasse 161**
**D-6900 Heidelberg-Rohrbach (DE)**
Erfinder : **Baron, Hubertus, Dr.**
**Froschlache 3**
**D-6700 Ludwigshafen (DE)**

Freitragender Rührer zum Durchmischen eines Schüttgutbettes

Die Erfindung bezieht sich auf einen freitragenden Rührer zum Durchmischen eines Schüttgutbettes, mit einem Rührorgan, dessen unteres dem Boden des Rührbehälters zugewandtes Ende in eine Nabe übergeführt ist, die ihrerseits auf einer senkrechten, durch den Boden des Rührbehälters führenden Antriebswelle aufsitzt und bei dem die Antriebswelle in einer am Boden des Rührbehälters befestigten Laterne gelagert und mittels einer Hubeinrichtung vertikal verstellbar ist.

Für eine durchmischende Bewegung von pulverförmigen bis feinkörnigen Gütern ist die Verwendung von motorisch angetriebenen, freitragenden Rührern bekannt. Die Rührer werden je nach den vorliegenden Bedingungen in unterschiedlicher Form ausgeführt, wobei das rührende Organ z. B. als Balken, Finger, Wendel oder Anker ausgebildet ist. Die Mischwirkung dieser Einrichtung hängt dabei in der Regel von der Rührerkonstruktion, der Drehzahl des Rührers sowie von der Beschaffenheit des zu durchmischenden Gutes ab. Besonders schwierig sind Rühr- und Mischvorgänge in den Pulverschichten der durch Gasphasenpolymerisation gewonnenen Stoffe, wie Polyäthylen oder Polypropylen. Bei diesen Stoffen werden häufig die Mischbewegungen durch die Neigung der entstehenden pulverförmigen bis feinkörnigen Reaktionsprodukte zum schmelzen oder zum sintern behindert. Besonders auffallende Störungen ergeben sich zudem bei langen Antriebswellen der Rührorgane durch Biegeschwingungen, die sich unter anderem nachteilig auf die Wellenabdichtungen auswirken.

Aus der DE-C-12 18 265 und der DE-C-15 57 042 sind zwar freitragende Rührer mit kurzen durch den Boden des Rührbehälters führenden, senkrechten Antriebswellen bekannt, die von den geschilderten Nachteilen frei sind und bei kleineren Reaktoren einen störungsfreien Polymerisationsablauf ermöglichen. Beim Übergang auf größere Polymerisationsreaktoren, beispielsweise größer 10 m$^3$ Inhalt, hat es sich jedoch gezeigt, daß solche Rührer nicht in jeder Hinsicht befriedigen. insbesondere die mit der Vergrößerung der Einheiten gestiegenen Rührerleistungen, die vergrößerten Durchmesser der Rührorgane sowie höhere Reaktionsdrücke erfordern zusätzliche Einrichtungen, beispielsweise Gleitringe, für die Abdichtung der Antriebswelle. Der Einsatz und die Handhabung einer Gleitringdichtung dieser Größenordnung zwingt jedoch sowohl beim Betreiben des Rührbehälters als auch bei Montagevorgängen zu erheblichem Aufwand und äußerster Sorgfalt. Hierzu gehören beispielsweise auch, daß bei der Gleitringmontage oder -demontage die Antriebswelle mit dem Rührorgan entweder absolut achstreu festfixiert oder aber radial leicht beweglich abgehangen werden kann. Derartige Montagevorbedingungen waren bislang nur bei geöffneten, entleerten und gesäuberten Rührbehältern gegeben.

Weiterhin ist in der DE-A-1 757 921 ein Rührwerk mit verschiebbarer Rührerwelle beschrieben, wobei die Rührerwelle in einer Laterne mit angeschlossenem Lagergehäuse gelagert und von einer Wellenspaltabdichtung umgeben ist. Rührerwelle und Wellenspaltabdichtung sind mittels eines Gewinderinges oder mittels einer Hydraulikeinrichtung axial verschiebbar. Nach der Axialbewegung der Rührerwelle liegt ein innerhalb des Behälters an der Rührerwelle angebrachter Dichtungsring an einer Ringdichtung auf dem Behälterboden an. Für das Durchmischen eines Schüttgutbettes ist eine solche Konstruktion indes nicht geeignet, da der Dichtungsring die Welle mit dem aufgesetzten Rührer bei Beanspruchung durch ein Schüttgutbett nicht ausreichend zu zentrieren vermag.

Es war daher Aufgabe der Erfindung einen freitragenden Rührer zum Durchmischen eines Schüttgutbettes zu entwickeln, der diese Nachteile nicht aufweist und eine weitgehend gleichmäßige Durchmischung des gesamten Behälterinhalts ermöglicht. Der Rührer soll außerdem wartungsfreundlich sein und insbesondere während seiner Wartung ein Entleeren des Behälterinhalts nicht erforderlich machen.

Erfindungsgemäß wird die Aufgabe dadurch gelöst, daß die mit der Antriebswelle verbundene Nabe einen Kegelring besitzt, der einen am Boden des Rührbehälters angebrachten Zentrierkegel übergreift.

Zwischen Kegelring und Zentrierkegel ist nach der Erfindung ein Ringspalt ausgebildet, über den dem Reaktor entlang des Rührorgans zur Polymerisation und Wärmeabfuhr z. B. Äthylen oder Propylen zugeführt und gleichmäßig über das Schüttgut verteilt wird, wodurch Konzentrationsunterschiede weitgehend ausgeglichen und lokale Überhitzungen verhindert werden. Durch Absenken des Rührers samt Antriebswelle auf den Zentrierkegel am Boden des Rührbehälters wird der Ringspalt verschlossen und der Rührer verbleibt in seiner Achslage. Vorzugsweise ist dabei die Antriebswelle durch einen Montagering in einer Laterne fixiert. Ein Entleeren des Behälterinhalts für die anschließenden Wartungsarbeiten ist nicht erforderlich. Auf diese Weise lassen sich somit erhebliche Zeit- und Aufwandgewinne erzielen.

Durch die stufenlose Verstellbarkeit der Antriebswelle und damit des gesamten Rührers kann die Größe des Ringspalts im Sinne einer optimalen Einstellung zur Freihaltung der Dichtflächen von Feststoff, z. B. Polymerisat, variiert werden. Darüber hinaus kann bei geänderten Reaktordurchsätzen die Fließgeschwindigkeit des zuzuführenden Mediums konstant gehalten werden, so daß das hinter dem Spalt eintretende Medium das Mischverhalten des Reaktorinhalts nicht beeinflußt bzw. durch Anpassung der Fließgeschwindigkeit des zuzuführenden Mediums die Mischwirkung im Bereich des Reaktorbodens und die Medienverteilung verändert werden. Schließlich sind auch mit der Hubeinrichtung bei entsprechend gestaltetem Rührorgan, beispielsweise bei einem Wendelrührer, Variationsmöglichkeiten im Abstand zwischen Rührorgan und Behälterboden gegeben.

Nach einem weiteren Merkmal der Erfindung besteht die Antriebswelle aus lösbar miteinander verbundenen Wellenabschnitten. Diese können nach dem Absenken des Rührers teilweise entfernt werden, wodurch Reparaturarbeiten, insbesondere der Austausch der Gleitringeinheiten leichter durchzuführen sind.

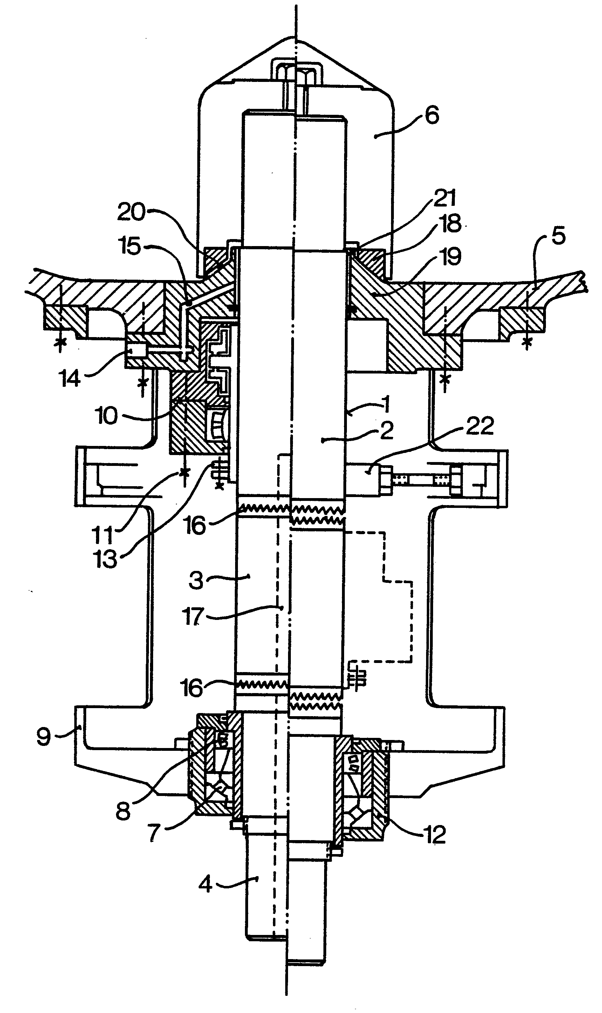

Im folgenden wird der erfindungsgemäße Rührer unter Hinweis auf die Zeichnung anhand eines Ausführungsbeispiels näher erläutert. Die Zeichnung zeigt zwei Zustandsdarstellungen in einer Ansicht.

Der Rührer besteht aus einem in der Mittelachse des Behälters angeordneten Rührorgan (in der Zeichnung nicht dargestellt), beispielsweise aus einer Wendel oder einem Anker, deren bzw. dessen unteres, dem Boden 5 des Rührbehälters zugewandtes Ende in eine Nabe 6 übergeführt ist. Diese ist mit einer senkrechten durch den Boden des Rührbehälters geführten Antriebswelle 1 verbunden. Mit 2, 3 und 4 sind die 3 Wellenabschnitte der Antriebswelle bezeichnet, die z. B. mittels Zuganker 17 und Stirnverzahnungselementen 16 biege- und torsionssteif miteinander verspannt sind. Die Antriebswelle selbst ist in der am Boden des Rührbehälters befestigten Laterne 9 gelagert, wobei das untere Radial- 7 und Achsiallager 8 in einer Hubeinrichtung, in der dargestellten Ausführung in einer Gewindebuchse 12, eingesetzt sind. Der Gleitring und das obere Radiallager bilden konstruktiv eine Einheit 10 und sind über Bolzenschrauben 11 am Behälterboden befestigt und durch eine Klemmverbindung 13 gesichert.

Mit Hilfe der sich gegen die Laterne 9 abstützenden Gewindebuchse 12 kann der Rührer zusammen mit der Antriebswelle 1 angehoben (Betriebszustand) bzw. abgesenkt (Wartungszustand) werden. Dadurch wird ein Ringspalt 20 zwischen dem am Boden 5 des Rührbehälters vorgesehenen Zentrierkegel 19 und dem in der Nabe 6 eingesetzten Kegelring 18 freigegeben oder verschlossen. Über Bohrungen 14 und 15 im Behälterboden sowie den Ringspalt 20 ist die Zufuhr von Gas — Monomer oder Inertgas — in den Rührbehälter möglich.

Bei dem bisher beschriebenen freitragenden Rührer sind Reparatur- oder Wartungsarbeiten, beispielsweise der Austausch des Gleitringes auf folgende Weise durchführbar :

Nach Rührerstillstand und Druckentspannung des Rührbehälters wird über die Bohrungen 14 und 15 zur Spülung des Ringspaltes 20 Stickstoff zugeführt. Die Klemmvorrichtung 13 wird gelöst und über die Gewindebuchse 12 erfolgt die Absenkung des Rührers mit der Antriebswelle bis zum Aufsetzen des Kegelringes 18 auf dem Zentrierkegel 19, welcher zusätzlich mit einem Überlauf 21 ausgerüstet sein kann. Damit ist der Behälterboden verschlossen und der Rührer mit der Antriebswelle zentriert. Nach dem Lösen der Bolzenschrauben 11 wird die Gleitring-Lagereinheit bis zur Mitte des Wellenmittelabschnittes 3 gesenkt und mit der Klemmvorrichtung 13 dort fixiert. Es folgt das Montieren eines geteilten Montageringes 22 und im Anschluß daran das Lösen und Entfernen des Zugankers 17. Durch weiteres Absenken der Wellenabschnitte 3 und 4 über die Gewindebuchse 12 wird der Wellenabschnitt 3 mit der Gleitring-Lagereinheit 10 freigesetzt und kann seitlich aus der Laterne 9 entnommen werden. Mit der Montage eines vorbereiteten Wellenabschnitts 3 mit aufgesetzter Gleitring-Lagereinheit 10 kann sofort begonnen und der Rührer in relativ kurzer Zeit wieder in Betrieb genommen werden.

**Ansprüche**

1. Freitragender Rührer zum Durchmischen eines Schüttgutbettes, mit einem Rührorgan, dessen unteres dem Boden (5) des Rührbehälters zugewandtes Ende in eine Nabe (6) übergeführt ist, die ihrerseits auf einer senkrechten, durch den Boden des Rührbehälters führenden Antriebswelle (1) aufsitzt, und bei dem die Antriebswelle in einer am Boden des Rührbehälters befestigten Laterne (9) gelagert und mittels einer Hubeinrichtung (12) vertikal verstellbar ist, dadurch gekennzeichnet, daß die mit der Antriebswelle (1) verbundene Nabe (6) einen Kegelring (18) besitzt, der einen am Boden (5) des Rührbehälters angebrachten Zentrierkegel (19) übergreift.

2. Freitragender Rührer nach Anspruch 1, dadurch gekennzeichnet, daß die Antriebswelle (1) durch einen Montagering (22) in der Laterne (9) fixiert ist.

3. Freitragender Rührer nach Anspruch 1, dadurch gekennzeichnet, daß die Antriebswelle (1) stufenlos verstellbar ist.

4. Freitragender Rührer nach Anspruch 1, dadurch gekennzeichnet, daß die Antriebswelle (1) aus lösbar miteinander verbundenen Wellenabschnitten (2), (3) und (4) besteht.

**Claims**

1. A self-supporting stirrer for mixing a bed of free-flowing solids, possessing a stirring device whose lower end, facing the botton (5) of the stirred vessel, passes into a hub (6) which in turn seats on a vertical drive shaft (1) which passes through the bottom of the stirred vessel, the drive shaft being carried in a cage (9) fixed to the bottom of the stirred vessel, and being able to be adjusted vertically by means of a lifting device (12), wherein the hub (6), connected to the drive shaft (1), possesses a conically recessed ring (18) which matches a centering cone (19) on the bottom (5) of the stirred vessel.

2. A self-supporting stirrer as claimed in claim 1, wherein the drive shaft (1) is fixed in the cage (9) by means of an assembling ring (22).

3. A self-supporting stirrer as claimed in claim 1, wherein the drive shaft (1) is steplessly adjustable.

4. A self-supporting stirrer as claimed in claim 1, wherein the drive shaft (1) consists of shaft sections (2), (3) and (4) which are detachably joined to one another.

## Revendications

1. Agitateur en porte-à-faux pour le brassage d'un lit de matière, comportant un organe d'agitation dont l'extrémité inférieure, dirigée vers le fond (5) du récipient d'agitateur, passe dans un moyeu (6) qui, à son tour, est placé sur un arbre d'entraînement (1) vertical, traversant le fond du récipient d'agitateur, et où l'arbre d'entraînement est monté dans une lanterne (9), fixée au fond du récipient d'agitateur, et est réglable verticalement au moyen d'un dispositif de levage (12) caractérisé par le fait que le moyeu (6), relié à l'arbre d'entraînement (1), comporte un anneau conique (18) qui recouvre un cône de centrage (19) monté sur le fond (5) du récipient d'agitateur.

2. Agitateur en porte-à-faux selon la revendication 1, caractérisé par le fait que l'arbre d'entraînement (1) est fixé dans la lanterne (9) par une bague de montage (22).

3. Agitateur en porte-à-faux selon la revendication 1, caractérisé par le fait que l'arbre d'entraînement (1) est réglable de façon continue.

4. Agitateur en porte-à-faux selon la revendication 1, caractérisé par le fait que l'arbre d'entraînement (1) est formé de sections d'arbre (2), (3) et (4) reliées les uns aux autres de façon amovible.